# EUROPEAN PATENT SPECIFICATION

(11) **EP 0 748 104 B1**
(45) Date of publication and mention of the grant of the patent: **27.08.2003**
(21) Application number: 96109040.4
(22) Date of filing: 05.06.1996
(51) Int. Cl.: H04M 11/00

(54) **Communication apparatus**
Fernmeldegerät
Moyen de communication

(30) Priority: 07.06.1995 JP 14056895
(43) Date of publication of application: 11.12.1996
(73) Proprietor: CANON KABUSHIKI KAISHA, Tokyo (JP)
(72) Inventor: Uno, Hiromichi, Ohta-ku, Tokyo 146 (JP)
(74) Representative: Vollnhals, Aurel, Dipl.-Ing.

(56) References cited:
- Patent Abstracts of Japan, Vol. 1995, No. 9(009), 31 October 1995; & JP 07-143313 A (RICOH) 02 June 1995,
- Patent Abstracts of Japan, Vol. 1995, No. 4(004), 31 May 1995; & JP 07-007569 A (CANON) 10 January 1995,
- Patent Abstracts of Japan, Vol. 17, No. 213 (E-1356), 1993; & JP 04-349761 A (CANON INC.),

## Description

The present invention relates to a communication apparatus and corresponding method, and more particularly to a communication apparatus having a DC loop forming circuit for a communication line by using a semiconductor device.

As a prior art apparatus of this type, a facsimile apparatus which conducts the communication through a telephone line has been known.

The telephone line has a specification (standard) which differ from country to country or area to area. As a result, a network control unit (NCU) which is compatible to the specification of the shipped country or area is mounted on the apparatus or a plurality of types of NCUs are mounted and one of the NCUs to be used is selected at the time of shipment.

In the prior art facsimile apparatus, the apparatus which mounts the NCU which differs from shipped area to shipped area must be manufactured and the manufacturing process of the apparatus is complex, which leads to the increase of the cost of the apparatus.

Further, when a plurality of types of NCUs are mounted on one facsimile apparatus, the number of parts significantly increases, which also leads to the increase of the cost. Moreover, it is acknowledged that document "Patent Abstracts of Japan, Vol. 17, No. 213 (E-1356), 1993 ·" & JP 04-349761 A discloses the respective features of the preambles of the appended independent claims.

It is an object of the present invention to improve a communication apparatus in light of the above problems.

It is another object of the present invention to provide a communication apparatus and corresponding method which is compatible to specifications of respective shipped areas with a simple construction.

In order to achieve the above object, in accordance with the present invention, a communication apparatus and corresponding method according to the appended independent claims are provided. Advantageous modifications are set forth in the appended dependent claims.

Details of the present invention will become apparent from the following detailed description of an embodiment and the accompanying drawings.
Fig. 1 shows a block diagram of a configuration of a facsimile apparatus of one embodiment of the present invention.
Fig. 2 shows a flow chart illustrating an operation of the embodiment, and
Fig. 3 shows a flow chart illustrating an operation of the embodiment.

One embodiment of the present invention is now explained in detail with reference to the drawings. In the following embodiment, a facsimile apparatus is specifically described. The present invention is not limited to the facsimile apparatus and it is equally applicable to various communication apparatus such as a telephone set and data communication by a computer.

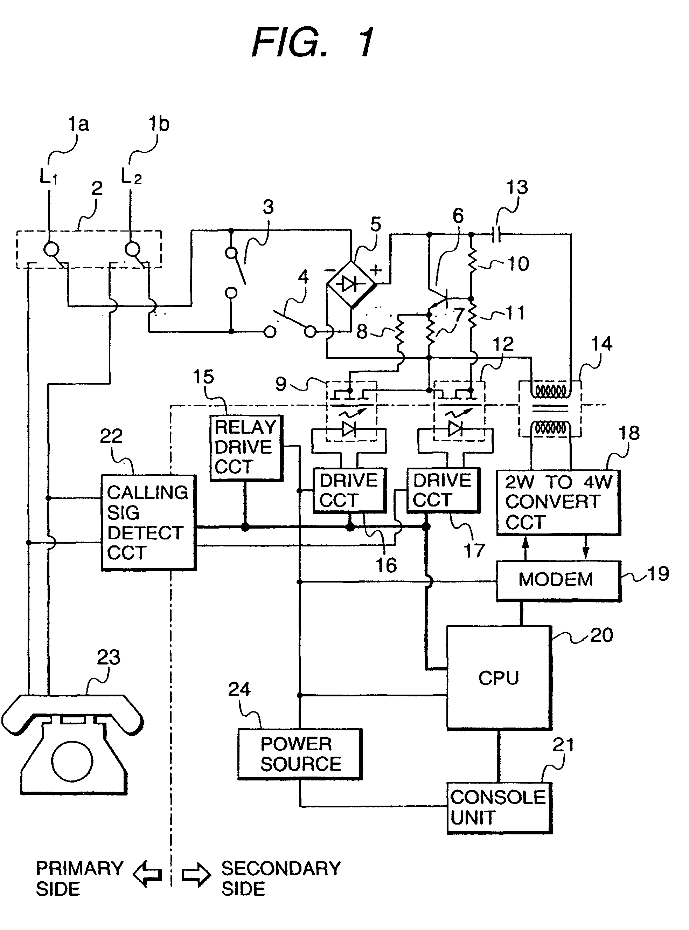

Fig. 1 shows a block diagram of a configuration of a facsimile apparatus of the present invention.

In Fig. 1, terminals 1a (L₁) and 1b (L₂) denote terminals which are connected to a telephone line.

A switching relay 2 switches the line between a modem 19 and a telephone set 23.

A relay 3 is a dialing pulse sending relay and a relay 4 is opened while the relay 3 sends the dialing pulse and closed when the communication is to be conducted by using a modem 19.

A diode bridge circuit 5 matches a polarity to a DC loop closing circuit connected in a succeeding stage.

A circuit comprising a transistor 6, resistors 7, 8, 10 and 11 and PHOTOMOS (trade mark) relays 9 and 12 is a DC loop forming circuit and a circuit for switching an electrical characteristic of the former circuit in the embodiment. A capacitor 13 blocks a DC current. A separation transformer 14 separates a primary circuit from a secondary circuit.

A two-wire/four-wire conversion circuit 18 is connected to the secondary circuit of the separation transformer 14 and conduct the conversion between the two-wire (line) and the four-wire (modem).

A calling signal detection circuit 22 is connected to the lines 1a and 1b when the relay 2 is not switched. The telephone set 23 is also connected in parallel to the calling signal detection circuit 22.

The modem 19 modulates and demodulates transmission/reception signals of the facsimile and a CPU 20 conduct an overall control to the apparatus. A relay drive circuit 15 drives the relays 2, 3 and 4.

A drive circuit 16 drives the PHOTOMOS (trade mark) relay 9 and a drive circuit 17 drives the PHOTOMOS (trade mark) relay 12. A console unit 21 conducts the entry by various keys of the facsimile apparatus and display output and a power supply 24 is connected to an AC power line to generate a drive power to the facsimile apparatus.

The CPU 20 comprises a microcomputer, a ROM and a RAM and the facsimile apparatus includes a read unit and a record unit which are not shown.

An operation of the present embodiment thus constructed is now explained in sequence.

Where the facsimile communication is conducted after the reception of a calling signal, the relay 2 is switched to the calling signal detection circuit 22 and the telephone set 23.

When the calling signal is transmitted over the line and applied to the terminal 1a, it goes into the calling signal detection circuit 22 and the telephone line 23 through the relay 2 and outputted from the terminal 1b. The output signal of the calling signal detection circuit 22 is applied to the CPU 20 which determines whether it is the calling signal or not. If it is determined as the calling signal, the relay drive circuit 15 starts to operate by a command from the CPU 20.

The relay 2 is switched to the separation transformer 14 and the relay 4 is closed. At this moment, the telephone line is closed by the facsimile apparatus.

When the line is closed, a DC current flow from the terminal 1a (L₁) and it is outputted from the terminal 1b (L₂) through the DC loop closing circuit. The DC current from the terminal 1a passes through the diode bridge 5, goes out of the + terminal thereof, applied to the collector of the transistor 6 and flows into the emitter.

In order to operate the transistor 6, it is necessary to apply a DC current to the base of the transistor 6. This is the function of the resistors 10 and 11. The connection or the non-connection of the resistor 11 is selected by the PHOTOMOS relay 12. The DC current flowing from the collector to the emitter of the transistor 6 is determined by the resistors 7 and 8. The connection or the non-connection of the resistor 8 is selected by the PHOTOMOS relay.

The DC current flows from the emitter of the transistor 6 to one end of the diode bridge 5 through the resistors 7 and 8. It passes through the relay 4 and is outputted to the terminal 1b (L₂) through the relay 4.

Since the communication signal of the facsimile is an AC signal, it flows from the terminal 1a (L₁) to the diode bridge 5 through the relay 2, is outputted from the + terminal and applied to the separation transformer 14 through the capacitor 13.

A signal component is transmitted to the secondary circuit of the line by the separation transformer 14. The signal outputted from the other terminal of the separation transformer winding is applied to one terminal of the diode bridge 5 and returned to the line from the terminal 1b (L₂) through the relays 4 and 2. The facsimile communication signal transmitted to the secondary circuit of the line is separated into the transmission signal and the reception signal by the two-wire/four-wire conversion circuit 18 and applied to the modem 19 and the facsimile communication operation is conducted by the control by the CPU 20.

An operation to switch a voltage-current characteristic (electrical characteristic) of the DC loop closing circuit is now explained.

For example, when a current characteristic is to be enhanced in the voltage-current characteristic, an input is entered by a key from the console unit 21. Thus, a command is issued from the CPU 20 to the drive circuit 16 and 17. Assuming that only the resistor 8 is connected, the drive circuit 16 is activated to turn on (close) the PHOTOMOS relay 9. Thus, the resistors 7 and 8 are connected in parallel and the current flowing from the collector to the emitter of the transistor 6 increases. As a result, the current characteristic is enhanced.

On the contrary, when the voltage characteristic is to be enhanced, the PHOTOMOS relay 12 is turned on (close) to connect the resistor 11.

In this manner, four different voltage-current characteristics may be imparted by the operation of the PHOTOMOS relays 9 and 12.

In the present embodiment, the PHOTOMOS relays 9 and 12 are used. Alternatively, a high sensitivity photo-coupler or a mechanical relay may be used to attain the same effect.

The operation to switch the voltage-current characteristic is conducted by the key entry from the console unit 21 in the present embodiment. Alternatively, a memory may be provided in the console unit 21 to store the connection configurations for the shipped areas and one of them may be set when the shipped area is set.

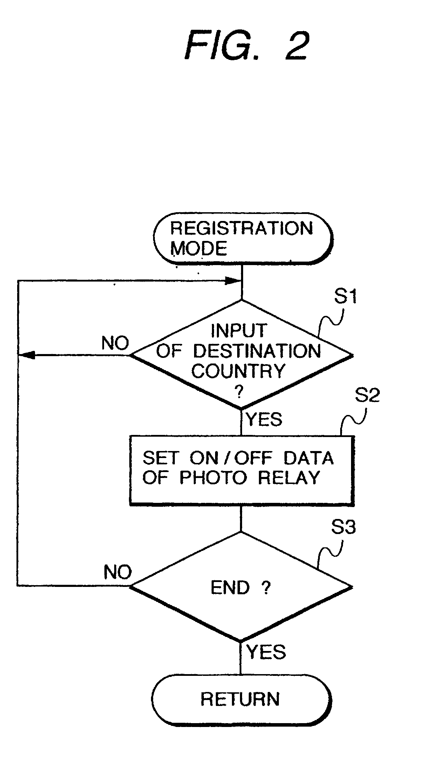

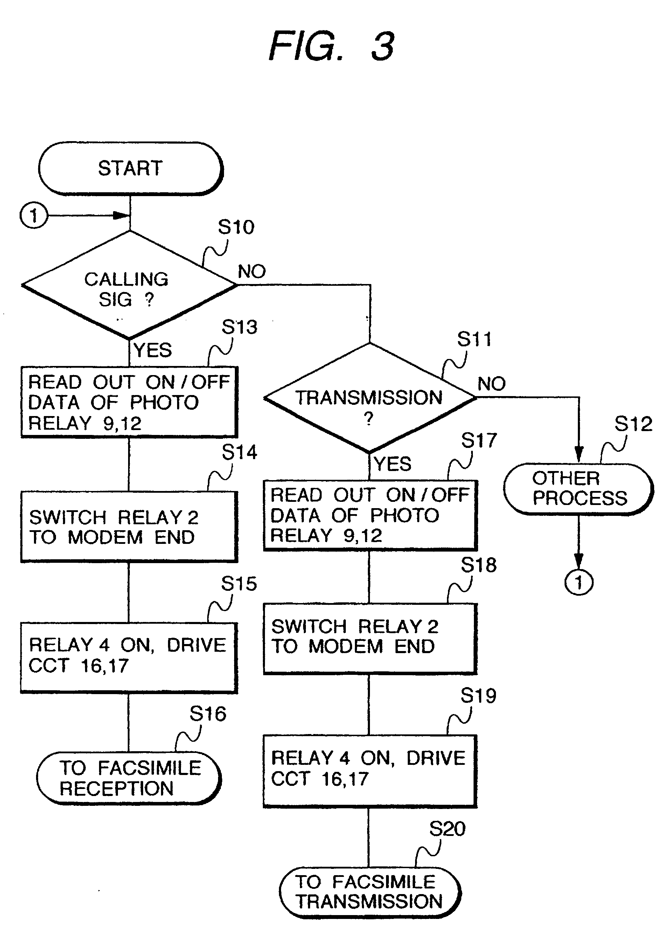

Figs. 2 and 3 show flow charts of control operations of the CPU 20 in the operation of the present embodiment.

Fig. 2 shows a flow chart illustrating a mode to register on/off data of the photo-relays 9 and 12 by the input of the shipped area and Fig. 3 shows a flow chart illustrating control of the photo-relays 9 and 12 by the CPU 20 at the reception of call and the transmission of a call from the line.

When the registration mode is selected by the key entry of the console unit 21, the input of the shipped area is monitored in a step S1 of Fig. 2, and when the shipped area is inputted, the on/off data of the photo-relays 9 and 12 for the shipped area is set in a predetermined area of the backed-up RAM, not shown, in a step S2. When the end of the registration mode is determined in a step S3, the process of Fig. 2 is terminated.

In a step S10 of Fig. 3, when the calling signal from the line is detected, the registered on/off data of the photo-relays 9 and 12 is read from the RAM, not shown, in a step S13, the relay 2 is switched from the telephone set 23 to the modem in a step S14, and the relay 4 is turned on in a step S15 to drive the drive circuits 16 and 17 in accordance with the on/off data read from the RAM. The facsimile reception process is executed in a step S16.

In a step S11 of Fig. 3, when the input of the communication command is determined, the similar process to that of the steps S13, S14 and S15 is executed in steps S17, S18 and S19 and the facsimile transmission process is executed in a step S20.

In accordance with the present embodiment, the DC loop forming circuit is constructed by using the semiconductor devices and the voltage-current characteristic (electrical characteristic) of the DC loop forming circuit is switched by the control from the line secondary circuit so that the space efficiency is improved and the single facsimile apparatus can be compatible to many specifications of the shipped areas.

Particularly, in the United Kingdom, the specifications of the communication apparatus and the telephone set define different voltage-current characteristics and the facsimile apparatus may be recognized as the telephone set depending on the setting thereof. Accordingly, in the prior art apparatus to be shipped to the United Kingdom, two types of circuit boards or two types of DC loop forming circuits are required. The present embodiment is compatible to either specification.

The present embodiment is not limited to the above embodiment but various modifications thereof may be made.

A communication apparatus has a circuit for forming a DC loop of a communication line by using a semiconductor device, and a circuit for switching an electrical characteristic of the DC loop forming circuit so that the communication apparatus is compatible to communication line specifications of respective shipped areas with a simple construction.

## Claims

1. A communication apparatus comprising:
a DC loop forming circuit (6, 7, 8) including a semiconductor device (6) for forming a DC loop of a communication line;
switching means (9, 12) for switching an electrical characteristic of said DC loop forming circuit; and
manipulation means (21);
**characterized in that**
said switching means (9, 12) switch the electrical characteristic in accordance with the operation by said manipulation means (21).

2. A communication apparatus according to Claim 1, wherein said semiconductor device (6) is a transistor and said switching means (9, 12) switch a voltage of a base of said transistor.

3. A communication apparatus according to Claim 1 or 2, wherein said switching means (9, 12) switch a resistor value of resistor means (7, 8) for determining a level of a current flowing in said semiconductor device (6).

4. A communication apparatus according to Claim 1, wherein said semiconductor device (6) is a transistor and said switching means (9, 12) connect or disconnect a resistor (11) and a base of said transistor.

5. A communication apparatus according to Claim 1 or 4, wherein said semiconductor device (6) is a transistor and said switching means (9, 12) connect or disconnect a resistor (11) and an emitter of said transistor.

6. A method for forming a DC loop, comprising a step of detecting an operation by a manipulation unit (21), and **characterized by**
a step of switching an electrical characteristic of a DC loop forming circuit (6, 7, 8) including a semiconductor device (6) in accordance with the operation by said manipulation unit (21).

7. A method according to Claim 6, wherein the electrical characteristic of the semiconductor device (6) is switched by switching a voltage of a base of a transistor included in said semiconductor device (6).

8. A method apparatus according to Claim 6 or 7, wherein the electrical characteristic of the semiconductor device (6) is switched by switching a resistor value of resistor means (7, 8) for determining a level of a current flowing in said semiconductor device (6).

9. A method according to Claim 6, wherein the electrical characteristic of the semiconductor device (6) is switched by connecting or disconnecting a resistor (11) and a base of a transistor included in said semiconductor device (6).

10. A method according to Claim 6 or 9, wherein the electrical characteristic of the semiconductor device (6) is switched by connecting or disconnecting a resistor (11) and an emitter of a transistor included in said semiconductor device (6).

## Patentansprüche

1. Fernmeldegerät mit
einer Gleichstromschleifen-Bildungsschaltung (6, 7, 8), die einen Halbleiterbaustein (6) enthält, zum Bilden einer Gleichstromschleife einer Fernmeldeleitung;
Schalteinrichtungen (9, 12) zum Schalten einer elektrischen Kenngröße der Gleichstromschleifen-Bildungsschaltung; und
einer Manipulationseinrichtung (21) ;
**dadurch gekennzeichnet, dass**
die Schalteinrichtungen (9, 12) die elektrische Kenngröße gemäß dem Betrieb durch die Manipulationseinrichtung (21) schalten.

2. Fernmeldegerät gemäß Anspruch 1, bei dem der Halbleiterbaustein (6) ein Transistor ist und die Schalteinrichtungen (9, 12) eine Spannung einer Basis des Transistors schalten.

3. Fernmeldegerät gemäß Anspruch 1 oder 2, bei dem die Schalteinrichtungen (9, 12) zum Bestimmen einer Höhe eines in dem Halbleiterbaustein (6) fließenden Stroms einen Widerstandswert von Widerstandseinrichtungen (7, 8) schalten.

4. Fernmeldegerät gemäß Anspruch 1, bei dem der Halbleiterbaustein (6) ein Transistor ist und die Schalteinrichtungen (9, 12) einen Widerstand (11) und eine Basis des Transistors verbinden oder trennen.

5. Fernmeldegerät gemäß Anspruch 1 oder 4, bei dem der Halbleiterbaustein (6) ein Transistor ist und die Schalteinrichtungen (9, 12) einen Widerstand (11) und einen Emitter des Transistors verbinden oder trennen.

6. Verfahren zum Bilden einer Gleichstromschleife, mit einem Schritt des Erfassens eines Betriebs durch die Manipulationseinheit (21), und **gekennzeichnet durch**
einen Schritt des Schaltens einer elektrischen Kenngröße einer Gleichstromschleifen-Bildungsschaltung (6, 7, 8), die einen Halbleiterbaustein (6) enthält, gemäß dem Betrieb **durch** die Manipulationseinheit (21).

7. Verfahren gemäß Anspruch 6, bei dem die elektrische Kenngröße des Halbleiterbausteins (6) durch Schalten einer Spannung einer Basis eines in dem Halbleiterbaustein (6) enthaltenen Transistors geschaltet wird.

8. Verfahren gemäß Anspruch 6 oder 7, bei dem die elektrische Kenngröße des Halbleiterbausteins (6) zum Bestimmen einer Höhe eines in dem Halbleiterbaustein (6) fließenden Stroms durch Schalten eines Widerstandswerts von Widerstandseinrichtungen (7, 8) geschaltet wird.

9. Verfahren gemäß Anspruch 6, bei dem die elektrische Kenngröße des Halbleiterbausteins (6) durch Verbinden oder Trennen eines Widerstands (11) und einer Basis eines in dem Halbleiterbaustein (6) enthaltenen Transistors geschaltet wird.

10. Verfahren gemäß Anspruch 6 oder 9, bei dem die elektrische Kenngröße des Halbleiterbausteins (6) durch Verbinden oder Trennen eines Widerstands (11) und eines Emitters eines in dem Halbleiterbaustein (6) enthaltenen Transistors geschaltet wird.

## Revendications

1. Appareil de communication comprenant :
un circuit de formation de boucle en courant continu (6, 7, 8) incluant un dispositif à semiconducteur (6) pour former une boucle en courant continu d'une ligne de communication;
des moyens de commutation (9, 12) pour commuter une caractéristique électrique du circuit de formation de boucle en courant continu; et
des moyens de manipulation (21);
**caractérisé en ce que**
les moyens de commutation (9, 12) commutent la caractéristique électrique conformément à l'opération effectuée par les moyens de manipulation (21).

2. Appareil de communication selon la revendication 1, dans lequel le dispositif à semiconducteur (6) est un transistor et les moyens de commutation (9, 12) commutent une tension d'une base de ce transistor.

3. Appareil de communication selon la revendication 1 ou 2, dans lequel les moyens de commutation (9, 12) commutent une valeur de résistance de moyens résistifs (7, 8) pour déterminer un niveau d'un courant circulant dans le dispositif à semiconducteur (6).

4. Appareil de communication selon la revendication 1, dans lequel le dispositif à semiconducteur (6) est un transistor et les moyens de commutation (9, 12) connectent ou déconnectent une résistance (11) et une base de ce transistor.

5. Appareil de communication selon la revendication 1 ou 4, dans lequel le dispositif à semiconducteur (6) est un transistor et les moyens de commutation (9, 12) connectent ou déconnectent une résistance (11) et un émetteur de ce transistor.

6. Procédé pour former une boucle en courant continu, comprenant une étape de détection d'une opération effectuée par une unité de manipulation (21), et
**caractérisé par**
une étape de commutation d'une caractéristique électrique d'un circuit de formation de boucle en courant continu (6, 7, 8) incluant un dispositif à semiconducteur (6), conformément à l'opération effectuée par l'unité de manipulation (21).

7. Procédé selon la revendication 6, dans lequel la caractéristique électrique du dispositif à semiconducteur (6) est commutée en commutant une tension d'une base d'un transistor inclus dans le dispositif à semiconducteur (6).

8. Procédé selon la revendication 6 ou 7, **caractérisé en ce que** la caractéristique électrique du dispositif à semiconducteur (6) est commutée en commutant une valeur de résistance de moyens résistifs (7, 8) pour déterminer un niveau d'un courant circulant dans le dispositif à semiconducteur (6).

9. Procédé selon la revendication 6, dans lequel la caractéristique électrique du dispositif à semiconducteur (6) est commutée en connectant ou en déconnectant une résistance (11) et une base d'un transistor inclus dans le dispositif à semiconducteur (6).

10. Procédé selon la revendication 6 ou 9, dans lequel la caractéristique électrique du dispositif à semiconducteur (6) est commutée en connectant ou en déconnectant une résistance (11) et un émetteur d'un transistor inclus dans le dispositif à semiconducteur (6).
